(19) Europäisches Patentamt
European Patent Office
Office européen des brevets

(11) Publication number: **0 055 493 B1**

(12) **EUROPEAN PATENT SPECIFICATION**

(45) Date of publication of patent specification: **12.03.86**

(51) Int. Cl.[4]: **C 05 C 9/00,** C 05 G 3/08

(21) Application number: **81110854.7**

(22) Date of filing: **30.12.81**

# (54) New composition of matter and method of use for nitrogen fertilization.

(30) Priority: **30.12.80 US 221435**

(43) Date of publication of application:
**07.07.82 Bulletin 82/27**

(45) Publication of the grant of the patent:
**12.03.86 Bulletin 86/11**

(84) Designated Contracting States:
**AT BE CH DE FR GB IT LI LU NL SE**

(56) References cited:
**FR-A-1 244 186**
**FR-A-2 011 088**
**FR-A-2 362 101**
**GB-A- 816 573**
**GB-A-1 366 641**
**US-A-1 966 820**
**US-A-4 073 633**

(73) Proprietor: **Fenn, Lloyd B.**
**3325 Bosham**
**El Paso Texas 79927 (US)**

(72) Inventor: **Fenn, Lloyd B.**
**3325 Bosham**
**El Paso Texas 79927 (US)**

(74) Representative: **Glawe, Delfs, Moll & Partner**
**Patentanwälte**
**Postfach 26 01 62 Liebherrstrasse 20**
**D-8000 München 26 (DE)**

**EP 0 055 493 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

It is a well-known fact that urea, because it contains approximately 46% by weight nitrogen, is potentially one of the best sources of nitrogen for fertilizing soils. However, effective use of urea on crops requiring surface fertilization applications has been limited due to high ammonia losses. These losses have been attributed to the influence of the enzyme urease, which in the presence of moisture appears to cause the hydrolysis of urea according to the following reaction:

$NH_2$
\ urease
$$C{=}O+H_2O \longrightarrow 2NH_3+CO_2 \qquad (1)$$
/
$NH_2$
urea water

It is now generally accepted, however, that the urea first reacts with the moisture to form ammonium carbonate, as follows:

$NH_2$
\ urease
$$C{=}O+3H_2O \longrightarrow (NH_4)_2CO_3\cdot H_2O \qquad (2)$$
/
$NH_2$
urea water

Ammonium carbonate is a relatively unstable compound, especially in alkaline environments. The compound decomposes according to the following reactions:

$$(NH_4)_2CO_3+H_2O \longleftrightarrow 2NH_4OH+CO_2 \qquad (3)$$

$$2NH_4OH \longleftrightarrow H_2O+2NH_3 \qquad (4)$$

Since ammonia and carbon dioxide are both gases, they readily volatilize into the atmosphere, thus urging the reactions to continue in the direction of decomposition.

It has also been generally recognized that urea applied to a soil surface does not produce serious ammonia loss in the first two days unless soil temperatures exceed 32°C. It is the third and fourth day when the ammonia loss becomes extremely severe. This is due to the fact that the microorganisms that produce the urease enzyme which hydrolyzes the urea must build up, and it generally takes about two days to produce the enzyme. This is because the enzyme is generally produced only when the material it works on, that is, urea, becomes available. When the soil microorganisms have built up sufficient enzyme, the urea is converted to ammonium carbonate according to equation (2). Further breakdown through volatilization of NH3 and CO2 according to equations (3) and (4), is usually inevitable.

Heretofore, the only practical solution to this ammonia volatilization loss was thought to be the rapid soil incorporation of urea-containing compositions so that the decomposition products would be exchanged or otherwise absorbed into the soil. Thus, urea is presently recommended for use as a fertilizer only where it can be "banded" into the soil, that is, applied beneath the soil's surface, or where it can be used with crops that are tilled, so that substantially all the urea is immediately placed beneath the soil's surface. The use of urea is generally not recommended on non-row crops, such as pastures, orchards, timber forests and the like, due to the fact that these crops can only be treated by direct application to the soil surface, as by pellets, solution, aerial spraying, or the like. The rapid volatilization of ammonia from surface-applied urea renders it much less effective as a fertilizer.

It has been suggested by a number of investigators that ammonia volatilization loss from urea fertilizers may be reduced by combining the urea with acid generating compounds. This would tend to produce a lower pH environment around the urea, which in turn would tend to prevent the decomposition of the ammonium carbonate formed upon urea hydrolysis. Young, in United States Patent No. 4,073,633, suggests further that the soil pH on a gross basis need not be changed (indeed, this is quite impractical in many soils), only that of the environment immediately surrounding the urea particles. The patent teaches that "it is essential only that the pH in the immediate environment of the particles be maintained at a neutral or slightly acidic level". Col. 1, lines 59—62. At Col. 2, lines 17—33 there are described a broad list of "acid generators", which are stated to be suitable for combination with urea to reduce surface volatility loss.

Further investigation has proven, however, that the problem of ammonia volatilization loss from surface application of urea to soils is not resolved as simply as the Young patent disclosure would suggest. It appears that the system described by Young retards ammonia loss for a relatively short period, but provides little value where the urea is left on the soil surface for more than two days. Morever, it also appears that the system works effectively only on soils having a high natural pH. In addition, it appears that many of the "acid-generator" compounds specified in the Young patent are not at all effective in reducing over-all ammonia loss. In short, prior to the present invention, the art has remained uncertain as to how to effectively inhibit ammonia volatilization losses from surface applied urea. Despite the obvious value of a fertilizer which could provide 46% by weight nitrogen without any unwanted or unnecessary mineral values, urea continues to be recommended only where it can be promptly directed to beneath the soil's surface.

Summary of the invention

The present invention is based upon the utilization of a naturally-occurring chemical buffer

mechanism, operating in all soils, wherein the presence of calcium has a substantial effect on soil pH. Generally speaking, whether calcareous or acidic, all soils contain calcium. The calcium may either be retained by the soil particles or is present in organic matter. In sandy soils a large part of the calcium is generally present in the organic matter. My research has confirmed that when this soil calcium is contacted by $CO_2$ or by a carbonate having a more reactive cation (such as ammonium carbonate), the formation of calcium carbonate ($CaCO_3$) tends to occur. This compound is a highly stable one and tends to precipitate, rather than react. Formation of the calcium carbonate then triggers a further reaction whereby calcium hydroxide is produced, as follows:

$$CaCO_3+H_2O \longleftrightarrow Ca(OH)_2+CO_2 \qquad (5)$$

A similar buffer mechanism exists between magnesium carbonate and hydroxide. Presence of the hydroxyl ions naturally tends to neutralize any acid conditions and raise the soil pH. It is this buffer mechanism which appears to counteract and eventually overcome the effect of the "acid generators" in retarding ammonia volatilization loss.

According to the present invention, the pH increasing effect of these buffer mechanisms is depressed through the addition to the system of a compound which provides free calcium and/or magnesium ions to replace the soluble calcium and/or magnesium which would otherwise be removed through the precipitation of the insoluble carbonate. This additional calcium/magnesium is provided either in the form of a soluble calcium or magnesium salt or in the form of a compound which produces a cation exchange with the calcium and/or magnesium found in or associated with the soil. The tendency for the soil pH to increase in the presence of carbonate is thus overcome and the soil pH can be maintained at a level which suppresses the decomposition of ammonium carbonate. Moreover, those ammonium cations which may yet be formed during hydrolysis of urea, because they are more reactive than either calcium or magnesium cations, tend to exchange places with those ions and be retained in the soil. In either event, the ammonium ion is no longer available for conversion to free ammonia, and volatilization losses tend to decrease.

The invention thus provides a method of reducing ammonia volatilization loss from surface applied urea fertilizers, particularly any loss after about 24—48 hours following surface application, which comprises applying the urea fertilizer to the soil surface in the presence of an effective amount of a compound which depresses this naturally occurring buffer mechanism. Such compounds may be characterized as those having cations highly soluble in the reactant form but insoluble in the carbonate form. Cations of this type are many, but those contemplated for the present invention are calcium (Ca) and magnesium (Mg), which are readily available, present in most soils, and have not toxic effects. The appropriate compound would have a saturated solution pH between about 5.0 to about 8.0 and, in a hydrolyzing urea system, will form carbonates having a solubility product above about $10^{-10}$ grams per liter. Calcium and magnesium compounds have suitable characteristics include the chlorides, bromides, iodides, nitrites and nitrates. In addition, where calcium and/or magnesium are already available in the soil to be treated, compositions employing sodium (Na) or potassium (K), both of which tend to exchange with the calcium and/or magnesium in the soil to release the ion necessary to repress the action of the buffer, will be acceptable.

In summary, the present invention provides a method of reducing ammonia volatilization from ammoniated fertilizers and urea-containing fertilizers present on or at a soil surface by reduction of the soil pH characterized in that the fertilizer is applied to the soil surface in the presence of a water soluble salt that (a) has a saturated solution pH of about 5.0 to about 8.0 and (b) in a hydrolyzing system with the soil and the fertilizer, will form carbonates having a solubility product above about $10^{-10}$, and being capable of shifting the equilibrium

$$YCO_3+H_2O \rightleftarrows Y(OH)_2+CO_2$$

with Y=calcium or magnesium

present in the soil, to the left, so that there is a reduction in the ammonia volatilization which would otherwise occur after about 24—48 hours following surface application of a fertilizer. The amount of water soluble compound can best be determined by the chemical equivalents ratio (Y/N) of the calcium and magnesium (Y) provided (a) as a cation of the water soluble compound or (b) by way of cation exchange between a cation of the water soluble compound and calcium and magnesium present in the soil to the nitrogen (N) in the fertilizer, which chemical equivalents ratio (Y/N) is at least about 0.25, and is preferably from about 0.50 to about 1.0. Highly suitable water soluble compounds include water soluble salts of calcium, sodium, magnesium, and potassium, and most preferably would be selected from the group consisting of $Ca(NO_3)_2$, $CaCl_2$, $Mg(NO_3)_2$, $MgCl_2$, NaCl, KCL, and $KNO_3$.

The present invention thus achieves what the prior art, including Young, and others, failed to accomplish except for a too brief time, that is, the controlled reduction of soil pH at or near the hydrolyzing urea particles at a level sufficient to minimize the formation of free carbon dioxide and ammonia. The present invention accomplishes this by functioning as a reductant in the release of hydroxyl ions as opposed to adding hydrogen ions to neutralize the alkalinity produced by the hydrolyzed urea. The excess calcium prevents the dissolution of the alkaline

calcium carbonate-calcium hydroxide buffer system in response to a build-up of the acidity. This buffer system, in the absence of excess calcium, will maintain the soil pH at or near the range 7.0 to 8.2. With the present invention, it can be reduced to as low as 6.0 and maintained effectively below about 7.0.

The present invention provides also a fertilizer composition containing ammoniated or urea-containing fertilizer which is characterized by the presence of water soluble salt that (a) has a saturated solution pH of about 5.0 to about 8.0 and (b) in a hydrolyzing system with the soil and the fertilizer, will form carbonates having a solubility product above about $10^{-10}$, and being capable of shifting the equilibrium

$$YCO_3+H_2O \rightleftharpoons Y(OH)_2+CO_2$$

with Y=calcium or magnesium

to the left.

Brief description of the drawings.

Figure 1 sets forth ghe graphic results of ammonia loss from urea and ammonium nitrate surface applied to a Harkey silty clay soil, illustrating the reductive effect of added calcium in three separate forms;

Figure 2 illustrates in graphic form the reductive effect of added calcium to urea fertilizer surface applied to a Darco fine sand soil, over a period of days;

Figure 3 graphically depicts the reductive effect of added magnesium sulfate and calcium nitrate salts on cumulative ammonia loss from urea broadcast on Beaumont clay soil;

Figure 4 illustrates the significance of the change in Ca/N ratio on cumulative ammonia loss at different rates of application of compositions formulated according to the present invention.

Detailed description and preferred embodiments

The present invention provides a method of fertilizing with urea in which the urea may be applied directly to and left on the surface of the soil to be fertilized without concern for the loss of nitrogen value from the urea fertilizer through ammonia volatilization caused by breakdown of the urea molecule over time. According to the invention ammonia volatilization loss from surface applied urea fertilizer is substantially lessened by applying the urea fertilizer in combination with from about 0.05 to about 1.0 chemical equivalents per available nitrogen of a soluble neutral salt which reacts upon contact with the soil and in the presence of moisture to provide cations capable of forming essentially insoluble carbonates.

Theoretical reaction dynamics

Theoretical reaction dynamics for the method of the present invention will be discussed with focus on calcium as the influential cation. It should be understood that the reaction dynamics also apply when magnesium is the cation. The reaction of significance is as follows:

$$(NH_4)_2CO_3\cdot H_2O+CaX_2 \rightarrow CaCO_3+2NH_4X \quad (6)$$

In the equation, $CaX_2$ represents any suitably soluble calcium salt, as will be explained. The ammonium carbonate will be that produced through hydrolysis of urea according to reaction (2) above. In lime rich soils, certain inorganic ammonium compounds will also generate the production of ammonium carbonate.

The equilibrium of reaction (6) is such that where ammonium carbonate is generated, such as from hydrolysis of urea according to reaction (2), the presence of the soluble calcium salt under appropriate pH conditions will cause the rapid exchange of cations and precipitation of calcium carbonate ($CaCO_3$).

In acid soils initial pH values in the presence of calcium may be too low for calcium carbonate precipitation. Reaction (6) is relatively pH sensitive, and the cation exchange will take place only when the pH is greater than 7. Initial urea hydrolysis, however, will also occur more slowly in an acid environment. Protection against ammonia loss will not be necessary, therefore, until the pH exceeds 7. The continued generation of ammonium carbonate, however, will eventually increase the pH, even though in a highly localized fashion, to greater than 7. This will trigger the exchange of cations and the precipitation of $CaCO_3$ according to reaction (6). The reaction will thereafter proceed rapidly, assuming the presence of sufficient soluble calcium. Where there is insufficient soluble calcium, however, the reaction of equation (6) only exacerbates ammonia volatilization loss. This is because the carbonate precipitation will, in turn, trigger the buffer mechanism of reaction (5) to produce hydroxyl ions, thus further neutralizing the soil pH. The result will be a continuing decomposition of the ammonium carbonate and loss of ammonia according to reactions (3) and (4). The addition of soluble calcium, therefore, becomes an effective ammonia loss suppressing agent in acid soils, by suppressing the effect of reaction (5).

In either acid or calcareous soils, the volatility of ammonia from urea (and certain inorganic ammonium compounds which produce ammonium carbonate in the presence of calcium carbonate) is depressed by the addition of soluble calcium salts through a further mechanism. As the ammonium carbonate is generated through urea hydrolysis, the presence of soluble calcium will convert the ammonia through reaction (6) to more stable products, such as ammonium nitrate and ammonium chloride. Since these two products are both acidic, they also will neutralize some of the alkalinity caused by the production of ammonium carbonate. This means that it will take less than about one equivalent of calcium to suppress ammonia volatilization for each equivalent of urea nitrogen present. In fact, it has been

found that as low as about 0.25 equivalents of calcium per equivalent of urea nitrogen or inorganic nitrogen will be acceptable.

It will be noted that the presence of soluble calcium or magnesium salts will have an additional beneficial role, acting to reduce the pH of calcareous soils even before reaction (6) takes effect. The preceise mechanism involves precipitation of calcium CaCO3, reduction of soil pH, plus formation of soluble ammonium compounds, such as ammonium nitrate or ammonium chloride, all of which are acidic. The reduction of pH tends to slow down the decomposition of ammonium carbonate through reactions (3) and (4), thereby contributing to reducing the overall $NH_3$ loss potential. In a calcareous soil, $NH_3$ losses from surface broadcast urea are reduced to much lower values than would occur with inorganic compounds such as $NH_4Cl$, $NH_4NO_3$ and MAP, previously thought to have the lowest rates of ammonia loss.

To illustrate the significant results produced by the present invention, a series of experiments were conducted. Urea, ammonium sulfate and ammonium nitrate were each surface applied at a rate of 550 kg of ammonia nitrogen per hectare at 32°C to samples of three different soils: one calcareous (Harkey sicl) and two acidic (Darco fs and Beaumont clay). Native soil pH values were measured. All soils were oven dried. One percent organic matter (blue grass clippings) was added, the pH again determined and the soils placed 2.5 cm deep on a leached sand saturated with distilled water. Calcium carbonate was adjusted to 15% by weight in the Harkey sicl; the two other soils were not limed. The fertilizer was added to the surface of the three soils, first alone, and in a separate study, with a chemically equivalent ratio of a calcium or magnesium salt. Where the fertilizer was added with the salt, the mixture was surface applied to the soil as a liquid containing approximately 9% by weight nitrogen ($NH_4$ or $NH_2$ nitrogens). The calcium and magnesium sources were $Ca(NO_3)_2$, $CaCl_2$, $CaSO_4$, $MgCl_2$, $(Mg(NO_3)_2$, and $MgSO_4$. The calcium sulfate was applied dry because of its low aqueous solubility. Ammonia evolved from the surface was collected until the percent nitrogen was less than about 1% per day based upon the originally applied nitrogen. The collection apparatus was that described in Fenn and Kissel "Ammonia Volatilization from Surface Applications of Ammonium Compounds on Calcareous Soils: I. General Theory", Soil SCI. SOC. AMER. PROC. 37:855—859 (1973).

The accompanying drawings show the reductive effects of added calcium and magnesium salts on ammonia loss from urea, depending upon the particular source of calcium and/or magnesium. Losses for $MgCl_2$ are not shown but were identical to those from $CaCl_2$. It will be noted that losses from urea applied alone were the greatest, ranging from 76% in Harkey sicl (Fig. 1) to 50—60% from the other soils (Figs. 2 and 3). No differences were found in ammonia loss from soils treated with urea in combination with either $CaCl_2$ or $Ca(NO_3)_2$. The calcium sulfate resulted in ammonia losses of 71% of applied nitrogen, which is not significantly less than the 76% loss found with urea alone (Fig. 1).

The ammonia loss from Darco fs occurred very rapidly, leveling off at about 60% applied nitrogen (Fig. 2). The addition of a chemically equivalent amount of calcium to the fertilizer reduces losses to 10—15% overall and resulted in a much slower loss rate. The same effect was observed with the Beaumont clay soil, the maximum loss with the urea applied alone being about 46%, but less than 3% with the addition of soluble calcium (Fig. 3).

Ammonia volatilization loss from urea on Harkey sicl in the presence of $CaSO_4$ reduced very little, as shown in Fig. 1. However, magnesium sulfate applied with urea on a Beaumont clay was almost as effective as either the calcium chloride or calcium nitrate in reducing $NH_3$ loss.

In another series of experiments, the effect on soil pH of adding soluble calcium salt to the fertilizer was measured. A fixed amount of a calcium salt was added to 26.6 gm of soil and pH measured. Then a chemically equivalent amount of ammonium carbonate was added and pH values again measured, at several different times up to 72 hours. The reason ammonium carbonate was used instead of urea was that under most circumstances urea will hydrolyze to a sufficient degree only over a three to five day period. Table 1 reflects the measured surface soil pH values over the given period.

TABLE 1

Surface soil pH values as affected by 1.96 g of $(NH_4)_2CO_3 \cdot H_2O$ and an equivalent amount of Ca added to 26.6 g of soil.

| Soil | Salt | $(NH_4)_2CO_3 \cdot H_2O$ | Initial pH | Soil pH after 4 hrs | 24 hrs | 72 hrs |
|---|---|---|---|---|---|---|
| | | Harkey sicl | | | | |
| Soil | — | − | 7.7 | | | |
| Soil | — | + | 8.4 | 8.8 | 9.1 | 9.2 |
| Soil+$CaCl_2$ | 2.55 | − | 6.5 | | | |
| Soil+$CaCl_2$ | 2.55 | + | 5.3 | 5.7 | 6.0 | 6.3 |
| Soil+$Ca(NO_3)_2$ | 2.81 | − | 6.6 | | | |
| Soil+$Ca(NO_3)_2$ | 2.81 | + | 5.8 | 6.6 | 7.5 | 8.0 |
| Soil+$CaSO_4$ | 3.00 | − | 7.7 | | | |
| Soil+$CaSO_4$ | 3.00 | + | 7.0 | | 7.1 | |
| | | Darco fs | | | | |
| Soil | — | − | 5.8 | | | |
| Soil | — | + | 8.6 | | 9.1 | |
| Soil+$CaCl_2$ | 2.55 | − | 4.6 | | | |
| Soil+$CaCl_2$ | 2.55 | + | 5.8 | | 7.2 | 6.9 |
| Soil+$Ca(NO_3)_2$ | 2.81 | − | 4.5 | | | |
| Soil+$Ca(NO_3)_2$ | 2.81 | + | 6.5 | | 7.8 | 7.7 |
| | | Beaumont c | | | | |
| Soil | — | − | 4.8 | 5.0 | 5.0 | 4.9 |
| Soil | — | + | 8.6 | | | 8.8 |
| Soil+$CaCl_2$ | 2.55 | − | 3.9 | | | |
| Soil+$CaCl_2$ | 2.55 | + | 5.7 | 5.6 | 5.8 | 6.0 |
| Soil+$Ca(NO_3)_2$ | 2.81 | − | 3.9 | | | |
| Soil+$Ca(NO_3)_2$ | 2.81 | + | 6.3 | 6.3 | 6.6 | 6.9 |

With reference to Table 1, it will be observed that the addition of $CaCl_2$ or $Ca(NO_3)_2$ alone reduced soil pH by greater than one unit from the native pH of 7.7. The soil pH value with $CaSO_4$ alone was identical to that of the native soil. When the salt was added in combination with the ammonium carbonate, the pH was initially depressed even further, despite the fact that addition of the carbonate alone caused an increase. However, the total overall pH depression with the combined calcium sulfate and ammonium carbonate application was less

than 0.8 unit. This significant difference indicates the formation of large quantities of the acid salts ammonium chloride ($NH_4Cl$) and ammonium nitrate ($NH_4NO_3$) following addition of ammonium carbonate to soil containing $CaCl_2$ or $Ca(NO_3)_2$. However, after this significant initial pH depression, it should be noted that soil pH values had increased within 72 hours to 8.0 with calcium nitrate and 6.3 with calcium chloride.

The addition of soluble calcium alone to acid Darco fs soil also significantly reduced the soil pH, to 4.6 and 4.48 with $CaCl_2$ and $Ca(NO_3)_2$, respectively, from the native soil pH of 5.84. Soil pH with ammonium carbonate alone was 8.6, increasing to 9.13 within 24 hours. However, addition of the same amount ammonium carbonate in the presence of the soluble calcium produced soil pH values of 6.85 and 7.67, respectively, even after as much as 72 hours.

Ammonium carbonate applied to calcium-treated Beaumont clay resulted in a much lower final soil pH, consistent with a highly acidic native pH of 4.84. Similarly, as with the Darco soil, when the ammonium carbonate was added to Beaumont clay without the calcium salt, it immediately raised the pH to 8.7. The addition of soluble calcium values alone reduced soil pH, in the absence of ammonium carbonate, to 3.90. However, combining the ammonium carbonate with the soluble calcium values results in much lower pH values in the Beaumont clay soil than in either the Darco or in the calcareous Harkey. These pH values, even after 72 hours, were 5.99 for $CaCl_2$ and 6.85 for $Ca(NO_3)_2$.

These examples illustrate how the addition of calcium and/or magnesium in the form of a highly soluble salt such as $CaCl_2$ or $Ca(NO_3)_2$ produces a significant reduction in ammonia loss from all soils. This reduction actually occurs as a result of two different phenomena: the precipitation of the insoluble carbonate at pH values above 7, and $H_2CO_3$ decomposition in the acid soils. The effect of either of these phenomena, or both in combination, is to minimize ammonia volatilization. Expression of this effect would depend, at least initially, on the type of soil and on the urease activity within the soil. The initial pH would be determined by concentration of the calcium/magnesium salts in combination with a native pH of the soil. Each succeeding amount of ammonium carbonate produced by hydrolysis of the urea may further reduce the pH through the formation of acid salts. Consumption of the added calcium/magnesium in the form of the carbonate precipitation, however, lessens the induced pH reaction. These results also showed that the less soluble calcium salts, such as calcium sulfate ($CaSO_4$), are not effective in minimizing ammonia volatilization loss. Even though a considerable tendency exists for carbonate precipitation from a solution of ammonium carbonate and calcium sulfate, it is still not sufficient to effectively suppress ammonia loss.

Acid soils will have little permanent calcium carbonate since land preparation and rain fall would result in its loss. Calcium carbonate produced from the application of soluble calcium tends to exist only on the surface of an acid soil. The significant loss of soluble and exchangeable calcium and magnesium from Harkey sicl showed that these cations readily disappear in the presence of urea. Presence of carbonate and the loss of calcium and magnesium can only suggest formation of calcium carbonate. This study relies strongly on indirect soil evaluations to indicate this. Radioactive carbon-14 tracing would be necessary to precisely quantify the $CO_3$ formation, but considering the evidence presently available, calcium carbonate is probably formed in all three types of soils.

It will be noted from Figs. 1—3 that ammonia loss from ammonium nitrate in the presence of calcium was reduced. The percentage reduction was less than with ammonium sulfate. The likely mechanism of this loss reduction is the depression of soil pH.

Parameters

The effect of soluble calcium on reducing ammonia volatilization loss from urea appears to be the result of three independent phenomena: first, at a Ca/N ratio of 0.25, insoluble carbonate is precipitated; second, any extra calcium not precipitated reduces soil pH, inhibiting urea hydrolysis; and thirdly, the presence of calcium appears to further reduce the rate of urea hydrolysis through the formation of some type of complex between the urea and the precipitated carbonate. It is believed the urea may take the place of water of hydration around the calcium molecules when the calcium is released from the clay particles and organic matter. Urea hydrolysis becomes slow enough that nitrification and its acid production begins to convert ammonium ions to soluble $HNO_3$, which reacts with calcium carbonate to form $Ca(NO_3)_2$. This reintroduces soluble calcium into the system, and tends even further to minimize the obvious calcium requirement.

The role of soluble calcium/magnesium in reducing ammonia loss from soil by way of carbonate precipitation and soil pH depression can be further appreciated by comparing the effect of increasing rates of urea application at various ratios of calcium/magnesium cation to urea nitrogen. Investigations have indicated that soil pH, Ca/Mg precipitation, and the rate of hydrolysis of added urea are all related to reduction of ammonia loss.

Calcium/nitrogen ratios of 0.25 appear to be equally effective in reducing ammonia loss independent of nitrogen application rates. Higher ratios of Ca/N at 55 and 110 kg nitrogen per Hectare application rates do not further depress ammonia loss. At application rates of 550 and 1100 kg nitrogen per Hectare, calcium levels above a Ca/N ratio of 0.25 resulted in additional large depressions of ammonia loss. This additional affect was due to a depression in soil pH from increased calcium activity and a

dramatically reduced rate of urea hydrolysis. The chemical reaction of calcium with urea was complete at a Ca/N ratio of 0.25. Additional calcium, up to a ratio of 1.0, if added with a high enough rate of urea (such as 550 and 1100 kg nitrogen per hectare), will remain soluble and reduce the soil pH, thus being responsible for up to one-half of the total reduction in ammonia loss.

The effectiveness of the cation, calcium/magnesium, in ammonia loss reduction will depend upon the ratio of chemical equivalents to urea nitrogen. If the equivalents of calcium or magnesium are less than the equivalents of urea nitrogen, then the cation can be extensively precipitated as the carbonate. However, if the equivalents of the cation equal or slightly exceed the urea nitrogen concentration, then only a small amount will be precipitated as the carbonate. If the concentration of the cation is high enough, the soil pH values may be reduced low enough to cause carbonate loss as $CO_2$. In the case of lower rates of cation application, the pH of the soil will not be adequately depressed to direct the loss through this mechanism. At lower rates, the major pathway for $CO_3$ loss and ammonia loss reduction will be by carbonate precipitation.

The influence of the ratio of calcium/magnesium to urea nitrogen equivalents at various levels or urea on the ammonia lost from a sample of Harkey sicl is demonstrated by the results of laboratory and greenhouse experiments, reproduced in Fig. 4. In a broadcast application of urea with calcium, higher rates of calcium are required at the lowest nitrogen application rates. At 55 and 110 kg nitrogen per hectare, a calcium/nitrogen equivalent ratio of 1.0 reduced ammonia loss to approximately 30—35% of applied nitrogen. However, at 275 kg nitrogen per hectare and a Ca/N ratio of 0.50, ammonia loss was reduced more than at the Ca/N ratio of 1.0, with lower nitrogen rates. Progressively increasing the total amount of nitrogen resulted in a progressive decrease in the ratio of Ca/N required to reduced ammonia loss to less than 10% of applied nitrogen.

Addition of urea to the soil surface without any soluble calcium at 110 and 550 kg nitrogen per hectare generally reduced the adsorbed and soluble calcium and magnesium in the soil by approximately 25% of the equivalent nitrogen added.

The loss of ammonia for the lower nitrogen application rates was affected most by added calcium at a Ca/N ratio of 0.25. Additional calcium had little additional reductive effect on ammonia loss. However, as the rates of nitrogen application gradually increased, the effect of additional calcium became more and more important in reducing ammonia loss. Significant reductions in soil pH values were observed at higher nitrogen application rates with higher ratios of soluble calcium. The breaking point for rapid decreases in ammonia loss occurred at Ca/N ratios between 0.25 and 0.30 at these higher nitrogen application rates. It was apparent that a small amount of calcium significantly reduced soil pH and accordingly dramatically reduced additional ammonia loss. The extra quantity of calcium applied, however, is equal to a Ca/N ratio of 1 at 55 kg nitrogen per hectare and 0.50 at 110 kg nitrogen per hectare. At higher nitrogen application rates, smaller increases in the Ca/N ratio resulted in substantial pH depression. These pH reductions are an additional system for reducing ammonia losses.

The pH depression of calcareous soil by addition of soluble calcium is reported by Turner & Clark in Volume 82 of *Soil Science*, pp. 337—341 (1956) to be:

$$pH=-1/2 \log (Ca)-1/2 \log P_{CO_2}+K$$

If applied on the soil surface, the calculated value of

$$[1/2 \log {}_{p}CO_2+K]$$

yields approximately 6.73. The working equation for surface applications of soluble calcium, therefore, will be considered to be:

$$pH=6{,}73 -1/2 \log (Ca).$$

Up to approximately 1/2 of the total ammonia loss in calcareous soils may be the result of the reduced pH effect. The greater the nitrogen application rate, the closer the Ca/N ratio approaches 0.25 for acceptable reduction of both pH and ammonia loss.

The urea used in the present invention can be either particle-form or powdered, or any commercially available prill. It should be understood that, where the term "urea" or "urea fertilizer" is employed throughout this specification, it is intended to include 100% standard fertilizer grade urea as well as fertilizer compositions containing a major portion of urea admixed with an inorganic nitrogen fertilizer compound.

It is preferred that the salt or salts which are to be applied with the urea to the soil surface be combined with the urea in any manner suitable to produce a particle form combination in which the several components are closely associated. The salts can be incorporated into the prills or pellets, or they can be added after particle formation by any one of several coating procedures well-known to the art.

It can also be appreciated that any one or more of the salts can be added with the urea in a water solution and then applied to the soil surface in any suitable manner such as by spraying or otherwise distributing the solution on the soil surface.

The preferred salts to be employed in the present invention are relatively highly soluble and have a generally neutral solution pH (in the range 5.0 to 8.0). More importantly, they contain, or make available by cation exchange, cations which form carbonates with a solubility product more soluble than $10^{-10}$. The soluble salts of calcium,

sodium, magnesium and potassium, with saturated solution pH values in the range of about 5.6 to about 7.3, are particularly preferred.

The saturated solution pH values of some of the preferred salts are as follows:

Saturated solution pH values

| Salt | Saturated solution pH |
|---|---|
| $Ca(NO_3)_2$ | 6.7 |
| $CaCl_2$ | 7.2 |
| $Mg(NO_3)_2$ | 6.2 |
| $MgCl_2$ | 5.8 |
| NaCl | 5.7 |
| KCl | 6.7 |
| $KNO_3$ | 6.3 |

From the foregoing, it can be appreciated that the salts used in the present invention do not function to reduce the pH of the soil around the urea by means of their inherent acidity. Rather, it is the unique characteristic of the divalent cation, acting with the soil, which acts ultimately to produce a stable, low pH environment. In addition to those mentioned above, it will also be acceptable to employ other soluble salts, for example, those having the $NO_2$, $ClO_4$, $ClO_3$ and $ClO_2$ anions, so long as they meet the established criteria of reacting with the soil to produce insoluble carbonate.

Further, the present invention enables the use of nutritional salts such as potassium nitrate or potassium chloride with small amounts of calcium. Also, other nutrients such as phosphorous, iron or any other desired nutrient may be employed with the present invention.

In a preferred embodiment of the invention, the soil on which the urea fertilizer is to be surface applied is first analyzed to determine both the native pH and the extent to which exchangeable calcium ions are present. As has earlier been indicated, almost all soils contain exchangeable calcium. However, in some soils, the calcium is not as readily exchangeable, existing predominately in association with or adsorbed on the soil particles. The more important form of exchangeable soil calcium, for purposes of this invention will be that existing in the soil in the ionic state, readily soluble and capable of essentially immediate chemical reaction. This soluble, ionic form of calcium could be present naturally in the soil, largely as a result of associated organic matter, or it could be present as a result of prior cultivation procedures.

As will be explained in detail below, the existing state of the soil with regard to both pH and presence of exchangeable, soluble calcium will determine the most efficient application combinations and procedures. For example, where little or no readily exchangeable calcium is present, it will be preferred to apply the urea fertilizer in association with a full complement of soluble calcium, that is, at a Ca/N equivalent ratio equal to at least 0.25. Such a procedure will control and minimize ammonia loss from the surface applied urea primarily by means of the carbonate precipitation mechanism and the apparent formation of a complex between the urea molecules and the precipitated carbonate.

On the other hand, in high pH calcareous soils and/or where higher rates of urea application are contemplated under circumstances where it might be expected to have the urea remain on the soil surface for longer than about 2—3 days, it might be appropriate to provide additional soluble calcium, up to a Ca/N ratio of about 1.0, in order to take advantage of the additional beneficial effect of pH depression through suppression of the carbonate/hydroxide buffer.

In general, in order to obtain full advantage of the ammonia volatilization loss control of the method of the present invention, it will be necessary to apply the urea with the soluble cation at a ratio of available cation to urea nitrogen equivalents of between about 0.5 to about 1.0. As will be appreciated by those skilled in this art, it will be appropriate at times to add greater amounts of the soluble salt where it is desired to provide additional amounts of a particular beneficial cation. It may also be desired, at times, to employ two or more soluble salts having different cations. Thus, where it is desired to supplement the calcium or magnesium or potassium content of the soil, the constituency of the urea fertilizer composition may be modified prior to application by adding additional soluble salt of the same or having one or more different desirable cations.

Moreover, since the pH depressing effect of the compositions of the present invention also tends to reduce ammonia volatilization loss from inorganic ammonium-based compounds, it may be desirable at times to include a minor amount of soluble ammonium fertilizer with the urea. For example, the inclusion of ammonium nitrate ($NH_4NO_3$), will provide immediately available nitrate. However, where immediate nitrate availability is desired it will probably be more preferred to employ $KNO_3$ as the soluble salt, since most crops will also benefit from the added potassium.

## Claims

1. A method of reducing ammonia volatilization from ammoniated fertilizers and urea-containing fertilizers present on or at a soil surface by reduction of the soil pH characterized in that the fertilizer is applied to the soil surface in the presence of a water soluble salt that (a) has a saturated solution pH of about 5.0 to about 8.0 and (b) in a hydrolyzing system with the soil and

the fertilizer, will form carbonates having a solubility above about $10^{-10}$, and being capable of shifting the equilibrium

$$YCO_3+H_2O \rightleftarrows Y(OH)_2+CO_2$$

with Y=calcium or magnesium

present in the soil, to the left.

2. A method of claim 1 characterized in that the amount of the water soluble salt is determined by the chemical equivalents ratio (Y/N) of the calcium and magnesium (Y) provided (a) as a cation of the water soluble salt or (b) by way of cation exchange between a cation of the water soluble salt and calcium and magnesium present in the soil to the nitrogen (N) in the fertilizer, which chemical equivalents ratio (Y/N) is at least about 0,25.

3. A method according to claim 2 characterized in that the chemical equivalents ratio (Y/N) is from about 0,50 to about 1,0.

4. A method according to claim 1 to 3 characterized in that the fertilizer is urea particles.

5. A method according to claim 1, 2, 3, or 4 characterized in that the water soluble salt is a water soluble salt of calcium, sodium, magnesium, or potassium.

6. A method according to claim 5 characterized in that the water soluble salt is selected from the group consisting of $Ca(NO_3)_2$, $CaCl_2$, $Mg(NO_3)_2$, $MgCl_2$, NaCl, KCl, and $KNO_3$.

7. A fertilizer composition containing ammoniated or urea-containing fertilizer characterized by the presence of a water soluble salt that (a) has a saturated solution pH of about 5,0 to about 8,0 and (b) in a hydrolyzing system with the soil and the fertilizer will form carbonates having a solubility product above about $10^{-10}$, and being capable of shifting the equilibrium

$$YCO_3+H_2O \rightleftarrows Y(OH)_2+CO_2$$

with Y=calcium or magnesium

to the left.

8. A composition of claim 7 characterized in that the amount of water soluble salt is determined by the chemical equivalents ratio (Y/N) of the calcium and magnesium (Y) provided (a) as a cation of the water soluble salt or (b) by way of cation exchange between a cation of the water soluble salt and calcium and magnesium present in the soil to the nitrogen (N) in the fertilizer, which chemical equivalents ratio (Y/N) is at least about 0,25.

9. A composition of claim 8 characterized in that the chemical equivalents ratio (Y/N) is from about 0,50 to about 1,0.

10. A composition of claim 9 characterized in that the fertilizer is urea particles.

11. A composition of claim 7, 8, 9, or 10 characterized in that the water soluble salt is a water soluble salt of calcium, sodium, magnesium, or potassium.

12. A composition of claim 11 characterized in that the water soluble salt is selected from the group consisting of $Ca(NO_3)_2$, $CaCl_2$, $Mg(NO_3)_2$, NaCl, KCl, and $KNO_3$.

**Revendications**

1. Procédé pour réduire la volatilisation de l'ammoniac à partir d'engrais ammoniés et d'engrais contenant de l'urée présents sur ou à la surface du sol, par réduction du pH de la terre, caractérisé en ce que l'engrais es appliqué à la surface du sol en présence d'un sel hydrosoluble qui: (a) a un pH de sa solution saturée d'environ 5,0 à environ 8,0 et (b) formera, dans un système d'hydrolyse avec la terre et l'engrais, des carbonates ayant un produit de solubilité de plus de $10^{-10}$ environ et pouvant déplacer vers la gauche l'équilibre

$$YCO_3+H_2O \rightleftarrows Y(OH_2)+CO_2$$

Y représentant le calcium ou le magnésium présent dans le sol.

2. Procédé selon la revendication 1, caractérisé en ce que la quantité du sel hydrosoluble est déterminée par le rapport d'équivalents chimiques (Y/N) du calcium et de magnésium (Y) fourni (a) en tant que cation du sel hydrosoluble ou (b) par voie d'échange entre un cation du sel hydrosoluble et le calcium et le magnésium présents dans le sol, à l'azote (N) contenu dans l'engrais, ce rapport d'équivalents chimiques (Y/N) étant au moins égal à 0,25 environ.

3. Procédé selon la revendication 2, caractérisé en ce que le rapport d'équivalents chimiques (Y/N) est compris entre 0,50 environ et 1,0 environ.

4. Procédé selon l'une quelconque des revendications 1 à 3, caractérisé en ce que l'engrais est constitué par des particules d'urée.

5. Procédé selon l'une quelconque des revendications 1 à 4, caractérisé en ce que le sel hydrosoluble est un sel hydrosoluble de calcium, de sodium, de magnésium ou de potassium.

6. Procédé selon la revendication 5, caractérisé en ce que le sel hydrosoluble est choisi dans le groupe constitué par $Ca(NO_3)_2$, $CaCl_2$, $Mg(NO_3)_2$, $MgCl_2$, NaCl, KCl et $KNO_3$.

7. Composition d'engrais contenant un engrais ammonié ou contenant de l'urée, caractérisée par la présence d'un sel hydrosoluble qui: (a) a un pH de sa solution saturée d'environ 5,0 à environ 8,0 et (b) formera, dans un système d'hydrolyse avec la terre et l'engrais, des carbonates ayant un produit de solubilité de plus de $10^{-10}$ environ et pouvant déplacer vers la gauche l'équilibre

$$YCO_3+H_2O \rightleftarrows Y(OH_2)+CO_2$$

Y représentant le calcium ou le magnésium.

8. Composition selon la revendication 7, caractérisée en ce que la quantité du sel hydrosoluble est déterminée par le rapport d'équivalents chimiques (Y/N) du calcium et du magnésium (Y)

fourni (a) en tant que cation du sel hydrosoluble ou (b) par voie d'échange de cations entre un cation du sel hydrosoluble et la calcium et le magnésium présents dans le sol, à l'azote (N) contenu dans l'engrais, ce rapport d'équivalents chimiques (Y/N) étant au moins égal à 0,25 environ.

9. Composition selon la revendication 8, caractérisée en ce que le rapport d'équivalents chimiques (Y/N) est comprise entre 0,50 environ et 1,0 environ.

10. Composition selon la revendication 9, caractérisée en ce que l'engrais est constitué par des particules d'urée.

11. Composition selon l'une quelconque des revendications 7 à 10, caractérisée en ce que le sel hydrosoluble est un sel hydrosoluble de calcium, de sodium, de magnésium ou de potassium.

12. Composition selon la revendication 11, caractérisée en ce que le sel hydrosoluble est choisi dans le groupe constitué par $Ca(NO_3)_2$, $CaCl_2$, $Mg(NO_3)_2$, NaCl, KCl et $KNO_3$.

**Patentansprüche**

1. Verfahren zur Reduzierung der Verflüchtigung von Ammoniak aus ammoniakhaltigen Düngemitteln und harnstoffhaltigen Düngemitteln, die sich auf oder im Erdboden befinden, durch Verringerung des pH-Wertes des Erdbodens, dadurch gekennzeichnet, daß das Düngemittel auf den Erdboden in Gegenwart eines wasserlöslichen Salzes ausgebracht wird, wobei das wasserlösliche Salz (a) einen pH-Wert in gesättigter Lösung von etwa 5,0 bis etwa 8,0 aufweist, (b) in einem hydrolysierenden System mit dem Erdboden und dem Düngemittel Carbonate mit einem Löslichkeitsprodukt von oberhalb etwa $10^{-10}$ ausbildet, und (c) das im Erdboben vorhandene Gleichgewicht

$$YCO_3+H_2O \rightleftharpoons Y(OH)_2+CO_2$$

mit Y=Calcium oder Magnesium

nach links .verschieben kann.

2. Verfahren nach Anspruch 1, dadurch gekennzeichnet, daß die Menge des wasserlösliche Salzes durch das chemische Äquivalentenverhältnis (Y/N) von Calcium und Magnesium (Y), geliefert (a) als Kation des wasserlöslichen Salzes oder (b) durch Kationaustausch zwischen einem Kation des wasserlöslichen Salzes und in dem Erdboden vorhandenem Calcium und Magnesium, zu Stickstoff (N) in dem Düngemittel bestimmt wird, wobei das chemische Äquivalentenverhältnis (Y/N) mindestens etwa 0,25 beträgt.

3. Verfahren nach Anspruch 2, dadurch gekennzeichnet, daß das chemische Äquivalentenverhältnis (Y/N) im Bereich von etwa 0,50 bis etwa 1,0 liegt.

4. Verfahren nach einem der Ansprüche 1 bis 3, dadurch gekennzeichnet, daß das Düngemittel in Form von Harnstoffteilchen vorliegt.

5. Verfahren nach einem der Ansprüche 1 bis 4, dadurch gekennzeichnet, daß das wasserlösliche Salz ein Salz des Calciums, Natriums, Magnesiums oder Kaliums ist.

6. Verfahren nach Anspruch 5, dadurch gekennzeichnet, daß das wasserlösliches Salz aus der von $Ca(NO_3)_2$, $CaCl_2$, $Mg(NO_3)_2$, $MgCl_2$, NaCl, KCl und $KNO_3$ gebildeten Gruppe ausgewählt ist.

7. Düngemittelzusammensetzung mit einem Gehalt an ammoniak- oder harnstoffhaltigen Düngemitteln, gekennzeichnet durch die Anwesenheit eines wasserlöslichen Salzes, das (a) einem pH-Wert in gesättigter Lösung von etwa 5,0 bis etwa 8,0 aufweist, und (b) in einem hydrolysierenden System mit dem Erdboden und dem Düngemittel Carbonate mit einem Löslichkeitsprodukt von oberhalb etwa $10^{-10}$ ausbildet, sowie das im Erdboden vorhandene Gleichgewicht

$$YCO_3+H_2O \rightleftharpoons Y(OH)_2+CO_2$$

mit Y=Calcium oder Magnesium

nack links verschieben kann.

8. Zusammensetzung nach Anspruch 7, dadurch gekennzeichnet, daß die Menge des wasserlöslichen Salzes durch das chemische Äquivalentenverhältnis (Y/N) von Calcium und Magnesium (Y), geliefert (a) als Kation des wasserlöslichen Salzes oder (b) durch Kationaustausch zwischen einem Kation des wasserlöslichen Salzes und in dem Erdboden vorhandenem Calcium oder Magnesium, zu Stickstoff (N) in dem Düngemittel bestimmt wird, wobei das chemische Äquivalentenverhältnis (Y/N) mindestens etwa 0,25 beträgt.

9. Zusammensetzung nach Anspruch,7, dadurch gekennzeichnet, daß das chemische Äquivalentenverhältnis (Y/N) etwa 0,50 bis etwa 1,0 beträgt.

10. Zusammensetzung nach Anspruch 9, dadurch gekennzeichnet, daß das Düngemittel als Harnstoffteilchen vorliegt.

11. Zusammensetzung nach einem der Ansprüche 7 bis 10, dadurch gekennzeichnet, daß das wasserlösliche Salz ein Salz des Calciums, Natriums, Magnesiums oder Kaliums ist.

12. Zusammensetzung nach Anspruch 11, dadurch gekennzeichnet daß das wasserlösliche Salz aus der von $Ca(NO_3)_2$, $CaCl_2$, $Mg(NO_3)_2$, NaCl, KCl und $KNO_3$ gebildeten Gruppe ausgewählt ist.

Fig. 1

○ - UREA
● - UREA + Ca⁺⁺
□ - $NH_4NO_3$

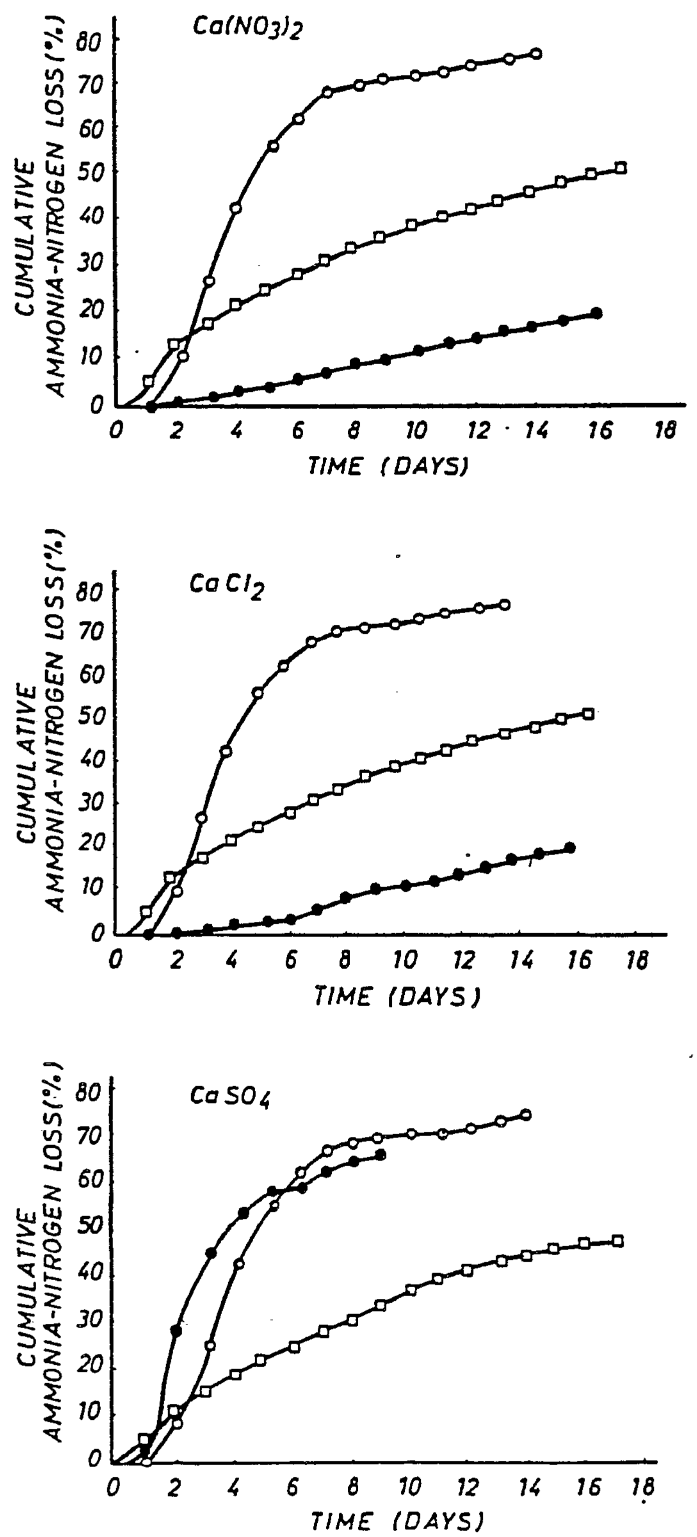

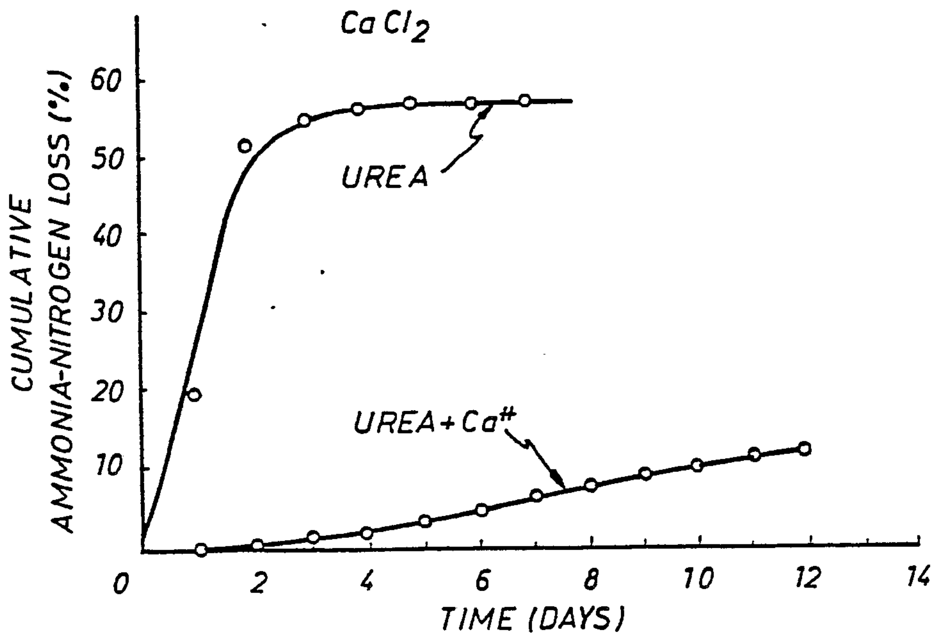

Ca Cl2
CUMULATIVE
AMMONIA-NITROGEN LOSS (%)
60
50
40
30
20
10
UREA
UREA + Ca#
0
2
4
6
8
10
12
14
TIME (DAYS)


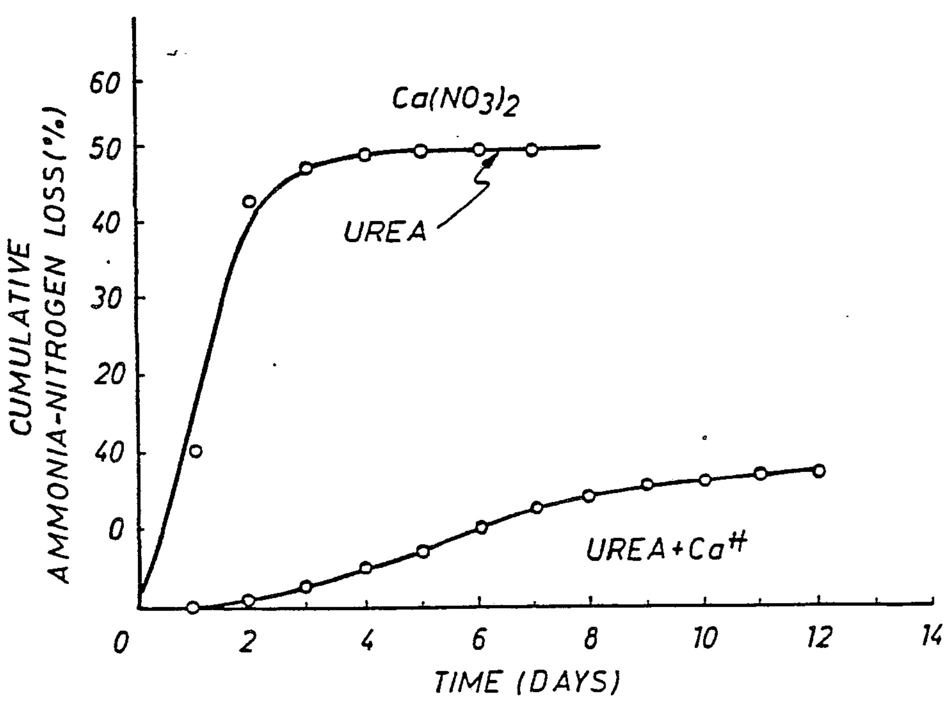

Ca(NO3)2
CUMULATIVE
AMMONIA-NITROGEN LOSS (%)
60
50
40
30
20
40
0
UREA
UREA + Ca#
0
2
4
6
8
10
12
14
TIME (DAYS)

Fig. 3

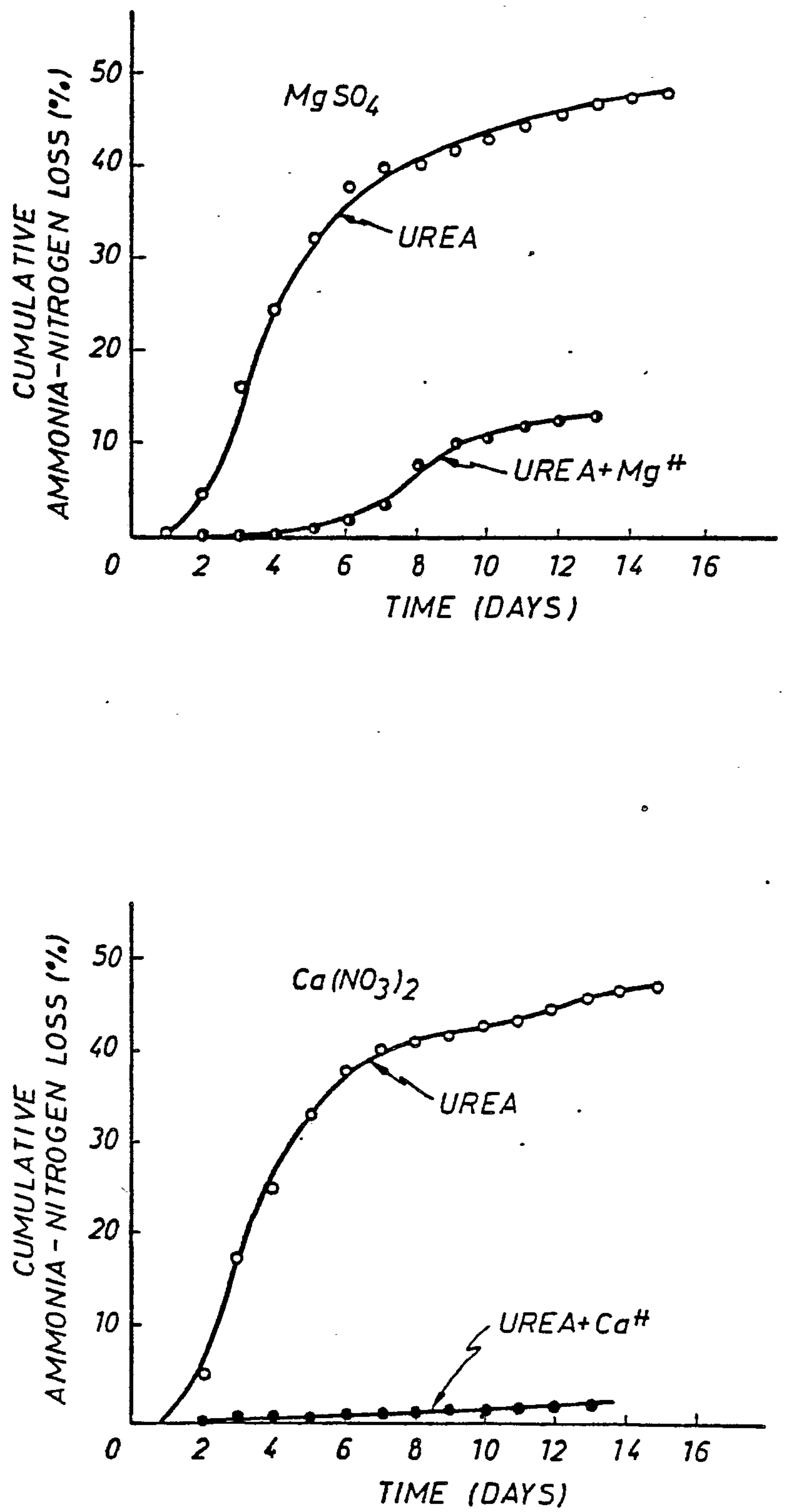

CUMULATIVE AMMONIA-NITROGEN LOSS (%)
50
40
30
20
10
$MgSO_4$
UREA
UREA+Mg#
0
2
4
6
8
10
12
14
16
TIME (DAYS)
CUMULATIVE AMMONIA-NITROGEN LOSS (%)
50
40
30
20
10
$Ca(NO_3)_2$
UREA
UREA+Ca#
0
2
4
6
8
10
12
14
16
TIME (DAYS)

Fig. 4

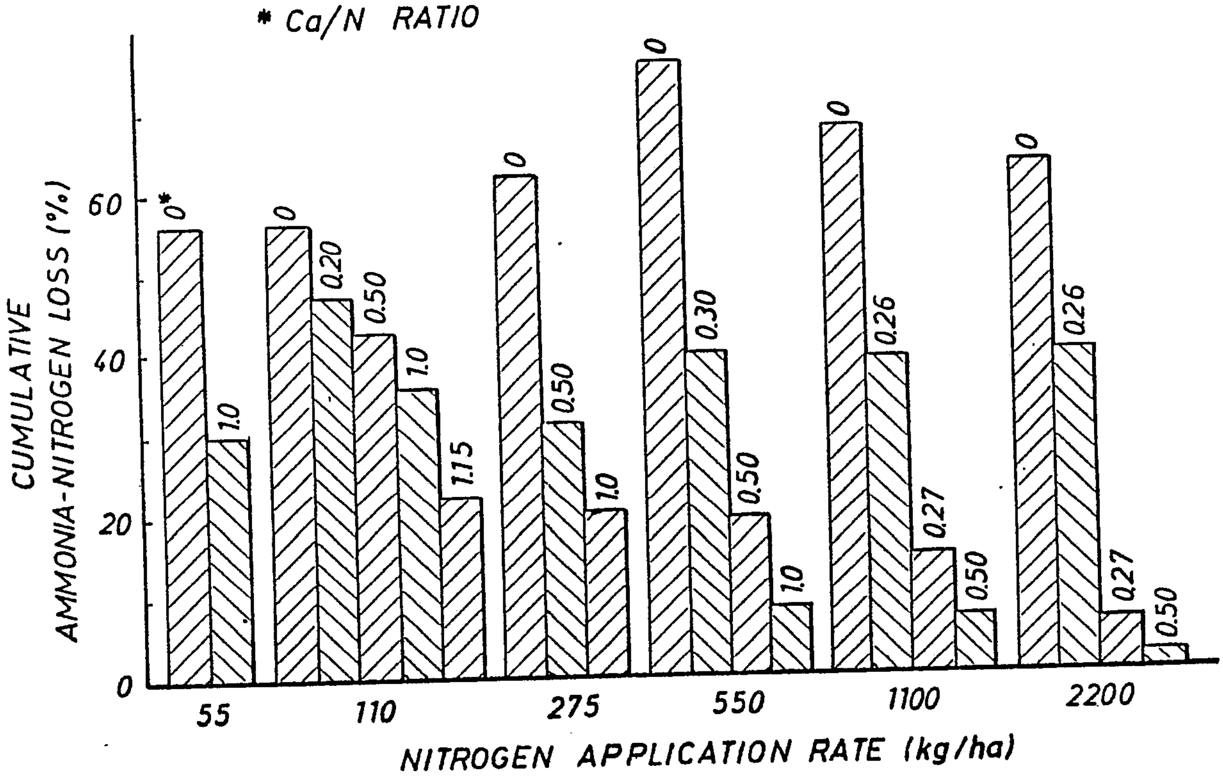
* Ca/N RATIO
CUMULATIVE
AMMONIA-NITROGEN LOSS (%)
0
20
40
60
0*
1.0
0
0.20
0.50
1.0
1.15
0
0.50
1.0
0
0.30
0.50
1.0
0
0.26
0.27
0.50
0
0.26
0.27
0.50
55
110
275
550
1100
2200
NITROGEN APPLICATION RATE (kg/ha)